(19) **Europäisches Patentamt / European Patent Office / Office européen des brevets**

(11) **EP 4 620 565 A1**

(12) **EUROPEAN PATENT APPLICATION**
published in accordance with Art. 153(4) EPC

(43) Date of publication:
**24.09.2025 Bulletin 2025/39**

(21) Application number: **23891562.3**

(22) Date of filing: **14.11.2023**

(51) International Patent Classification (IPC):
***B01J 20/30*** *(2006.01)*

(52) Cooperative Patent Classification (CPC):
**B01J 20/30**

(86) International application number:
**PCT/JP2023/040879**

(87) International publication number:
**WO 2024/106415 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.11.2022  JP 2022183490**

(71) Applicant: **Kurita Water Industries Ltd.**
**Tokyo 164-0001 (JP)**

(72) Inventors:
- **MORI Kouichi**
  **Tokyo 164-0001 (JP)**
- **ITOU Ichirou**
  **Tokyo 164-0001 (JP)**

(74) Representative: **TBK**
**Bavariaring 4-6**
**80336 München (DE)**

(54) **METHOD FOR MANUFACTURING ACIDIC GAS ADSORBENT**

(57)    A method for producing an acid gas adsorbent, the method including: a granulating step of granulating a layered double hydroxide together with a silicate binder and water to form a granulated material having a granule size of 1 to 10 mm in the form of pellets or spheres; and a heat-treating step of heat treating the granulated material for hardening.

EP 4 620 565 A1

## Description

Technical Field

The present invention relates to a method for producing an acid gas adsorbent. Particularly, it relates to a method for producing an acid gas adsorbent which efficiently removes acid exhaust gas occurring in a thermal power plant, a waste incineration plant, and the like.

Background Art

Combustion exhaust gases occurring in thermal power generation, waste incineration, and the like, contain harmful acid materials such as hydrogen chloride, sulfur oxides, and nitrogen oxides. For this reason, treatments using various methods are performed to remove the acid materials from the acid exhaust gas containing the acid materials.
In such a method for removing the acid materials, as an efficient treatment technology capable of simultaneously treating and removing a plurality of types of acid materials, the applicant has proposed a method for treating acid exhaust gas, treatment agents, and the like, using a carbonate-type Mg-Al layered double hydroxide (hereinafter, the layered double hydroxide is also referred to as LDH) as an acid gas adsorbent (Patent Literature 1).
The carbonate-type Mg-Al LDH is an acid gas adsorbent which can be regenerated and used repeatedly, and with respect to a method for regenerating the carbonate-type Mg-Al LDH, Patent Literature 1 discloses a technology in which one which has been converted to an anion-type Mg-Al LDH by being used to treat acid exhaust gas is mixed with a carbonic acid aqueous solution to form the carbonate-type Mg-Al LDH.
The present applicant has also disclosed, as another regeneration technology, a technology for regenerating an anion-type Mg-Al LDH into a carbonate-type Mg-Al LDH using post-treatment gas in which acid gases other than carbon dioxide have been removed through the treatment of acid exhaust gas (Patent Literature 2).
Patent Literature 2 is a technology which efficiently performs removal of acid exhaust gas by an acid gas adsorbent and regeneration treatment of the acid gas adsorbent in the same reaction tower, specifically, the carbonate-type Mg-Al LDH is filled in the reaction tower, and the acid exhaust gas is passed through the tower to adsorb and remove the acid gas, and when the carbonate-type Mg-Al LDH changes to the anion-type Mg-Al LDH to reduce treatability of the acid exhaust gas, the technology includes operating a switching valve to switch the passage destination of the acid exhaust gas to another reaction tower, and then introducing the post-treatment gas into the reaction tower filled with the anion-type Mg-Al LDH to perform the regeneration treatment.

Citation List

Patent Literature

    PTL1: JP 6954569 B

    PTL2: JP 6898627 B

Summary of Invention

Technical Problem

An acid gas adsorbent which is used by filling it into a reaction tower and which is subjected to regeneration treatment by contact with water containing a predetermined gas in the reaction tower, as in the regeneration treatment method of Patent Literature 2, must satisfy each of the following requirements, but a method for producing the acid gas adsorbent which satisfies each of the following requirements has not yet been put into practical use.

    (Requirement 1) It has a form such that the differential pressure is at a practical level when the acid exhaust gas or regenerated gas passes through the reaction tower.
    (Requirement 2) It has crushing strength that does not collapse even when filled into the reaction tower and compacted.
    (Requirement 3) It has water resistance that does not allow it to collapse, even when it is in contact with water during the regeneration treatment.
    (Requirement 4) It has an apparent porosity that can achieve a dynamic adsorption amount required for the continuous passage of the acid exhaust gas.

For example, the apparent porosity in (Requirement 4), the crushing strength in (Requirement 2), and the water resistance in (Requirement 3) are in a trade-off relation, and it has been conventionally believed that it is difficult to realize an acid gas adsorbent which satisfies each of the above requirements.

It is an object of the present invention to provide a method for producing an acid gas adsorbent which satisfies each of the above requirements.

Solution to Problem

As a result of intensive studies, the present inventors have found that the above problem can be solved by hardening the acid gas adsorbent by heat treatment after granulating it into a specific form. The present invention is based on this knowledge.

The present invention provides the following [1] to [5].

[1] A method for producing an acid gas adsorbent, the method comprising: a granulating step of granulating a layered double hydroxide together with a silicate binder and water added to form a granulated material having a granule size of 1 to 10 mm in the form of pellets or spheres; and a heat-treating step of heat treating the granulated material for hardening.

[2] The method for producing the acid gas adsorbent according to [1], wherein the granulating step further comprises adding a foaming agent to form the granulated material.

[3] The method for producing the acid gas adsorbent according to [1] or [2], wherein the foaming agent is pearl rock or obsidian.

[4] The method for producing the acid gas adsorbent according to any one of [1] to [3], wherein the silicate binder is sodium metasilicate.

[5] The method for producing the acid gas adsorbent according to any one of [1] to [4], wherein a heat treatment temperature in the heat-treating step is 150 to 600°C.

[6] The method for producing the acid gas adsorbent according to [1], wherein the silicate binder is a sodium metasilicate aqueous solution.

[7] The method for producing the acid gas adsorbent according to [6], wherein a concentration of the sodium metasilicate aqueous solution is 1 to 12% by mass.

[8] The method for producing the acid gas adsorbent according to [1], wherein the granulation is performed by using at least one selected from the group consisting of a rolling granulation method, a mixing and stirring granulation method, an extrusion granulation method, a compression granulation method, and a fluidized bed granulation method.

[9] The method for producing the acid gas adsorbent according to [1], wherein formation of the granulated material in the form of pellets is performed by using an extrusion granulation method.

[10] The method for producing the acid gas adsorbent according to [1], wherein formation of the granulated material in the form of spheres is performed by using an extrusion granulation method.

Advantageous Effects of Invention

According to the present invention, provided can be a method for producing an acid gas adsorbent, which has a form such that the differential pressure is at a practical level when acid exhaust gas or regenerated gas passes through a reaction tower, which has crushing strength that does not collapse even when filled in the reaction tower and compacted, which has water resistance that does not allow it to collapse, even when it is in contact with water during regeneration treatment, and which has an apparent porosity that can achieve a dynamic adsorption amount required for continuous passage of the acid exhaust gas.

According to the invention of claim 2, by adding a silicate binder, a foaming agent, and water to LDH, mixing them, and granulating them to obtain granulated materials having a granule size of 1 to 10 mm in the form of pellets or spheres, and then heat treating them, the silicate binder hardens to enhance the water resistance, and the foaming agent foams to enhance the apparent porosity, and the diffusion of acid gas in granules is promoted, to enhance the dynamic adsorption amount of the acid gas. In the acid gas adsorbent made of granulated LDH obtained by the method of claim 2, the crushing strength of 4 N or more is maintained even though the apparent porosity is enhanced. In the present description, the granulated LDH means the granulated material obtained in the granulating step and hardened by heat treatment, and is synonymous with the acid gas adsorbent.

If a filled bed height in the actual reaction tower is 3 m and a granule size of the granulated LDH is 5 mm, the load on the granulated LDH at the bottom of the filled bed is 0.34 N. Assuming a safety factor of 10, the crushing strength of the granulated LDH is sufficient for practical use if it is 4 N or more.

In the present description, the apparent porosity means volume/mass% of the void volume that are connected to the outside air of micro voids (pores) within the granulated LDH to the mass of the granulated LDH.

Brief Description of Drawing

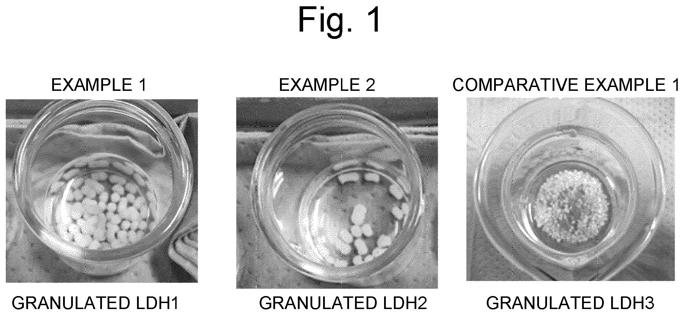

[Fig. 1] Fig. 1 are photographs showing water resistance assessment results of Example 1, Example 2, and Comparative Example 1.

Description of Embodiment

Hereinafter, an embodiment of the present invention will be described in detail.
In the following description, the notation "A to B" indicating a numerical range means "A or more and B or less", including the endpoints.
The present invention includes a granulating step of granulating a layered double hydroxide (LDH) together with a silicate binder and water added to form a granulated material having a granule size of 1 to 10 mm in the form of pellets or spheres, and a heat-treating step of heat treating the granulated material for hardening.

<Granulating Step>

[LDH]

The LDH is preferably a powdered carbonate-type Mg-Al layered double hydroxide.
A particle size of the powdered carbonate-type Mg-Al layered double hydroxide is preferably in a range of 0.004 to 0.1 mm. The particle size of this range allows uniform mixing with a foaming agent described later.

[Silicate Binder]

The above silicate binder is preferably sodium metasilicate.
Monosilicic acid is known to have strong interaction with Mg and Al. Sodium metasilicate readily dissolves in water to form highly reactive monosilicic acid. By adding sodium metasilicate and water, the Mg-Al layered double hydroxide reacts with monosilicic acid, and the monosilicic acid polymerizes to form polysilicic acid and thereby to be able to provide crushing strength and water resistance as the polymerization progresses, and becomes a granulated LDH that does not collapse even when filled in a reaction tower and compacted, and does not crack or collapse even when immersed in water.
Sodium metasilicate and water can be added separately, but from the viewpoint of ensuring uniform mixing/-dispersion, it is preferable that the sodium metasilicate is added as an aqueous solution in which it has been dissolved in water.
A concentration of the sodium metasilicate aqueous solution is not particularly limited, but is preferably 1 to 12% by mass.

[Foaming Agent]

In the granulating step, it is preferable that a foaming agent is further added to granulate the granulated material.
The foaming agent is preferably pearl rock or obsidian.
The pearl rock or obsidian is a mineral used as a raw material for perlite, and has the property of foaming when heated at high temperatures.
By heating the granulated materials granulated by mixing LDH with the pearl rock or obsidian, an apparent porosity of granulated LDH increases due to the foaming action of the pearl rock or obsidian.
A dynamic adsorption amount when acid exhaust gas is continuously passed through the granulated LDH depends on the apparent porosity of the granulated LDH. As the apparent porosity of the granulated LDH increases, the diffusion of the acid gas within the granulated LDH also increases, allowing the acid gas to be adsorbed more effectively.

[Granulation Method]

The method for granulating the above granulated material in the form of pellets or spheres is not particularly limited, but may include: a rolling granulation method using a drum-type granulator, a tumbling-disc granulator, etc.; a mixing and stirring granulation method using a Flexomix, a vertical granulator, etc.; an extrusion granulation method using a screw-type extrusion granulator, a roll-type extrusion granulator, a blade-type extrusion granulator, a self-forming extrusion granulator, etc.; a compression granulation method using a tablet press granulator, a briquet-type granulator, etc.; and a fluidized bed granulation method, in which a binder such as water and alcohol is sprayed while maintaining the suspension of titanate powder and binder in a fluid (mainly air) that is blown up, to granulate. Among them, the extrusion granulation method is preferable for forming pellets, and the rolling granulation method or the mixing and stirring granulation method is preferable for forming spheres.

[Granule Size]

A size of the granulated material granulated in the granulating step is 1 to 10 mm in a granule size.

By making the granule size 1 mm or more, the differential pressure when acid exhaust gas or regenerated gas is passed through the reaction tower can be made to a practical level. Particularly, this prevents excessive pressure loss when passing through the reaction tower, and suppresses the power consumption of a blower.

By keeping the granule size to 10 mm or less, it is possible to avoid the decrease in adsorption capacity due to the decrease in surface area, and maintain the adsorption capacity for the acid gas at a good level.

Here, the granule size of the granulated material corresponds to a diameter of the granulated material if they are in the form of spheres, and if they are in the form of pellets, it means the length of the part where the distance between two parallel plates is greatest when the granulated material is sandwiched between the plates (the distance between the two plates). The granulated material having a granule size of 1 to 10 mm is a granulated material that does not pass through a 1 mm opening screen but pass through a 10 mm opening screen when sieved.

<Heat-Treating Step>

By granulating after adding a silicate binder and water to LDH and mixing and then subjecting to heat treatment, the binder is hardened to make the granulated LDH having crushing strength that does not collapse when it is in contact with water during regeneration, and does not collapse even when a load is applied when filling the reaction tower.

In addition, by granulating after adding a silicate binder, a foaming agent, and water to LDH and mixing and then subjecting to heat treatment, the foaming agent foams and causes the apparent porosity of the granulated LDH to increase, and the dynamic adsorption amount for the acid gas to increase.

A heat treatment temperature in the heat-treating step is preferably 150 to 600°C.

An atmospheric condition for the heat treatment can be either an air atmosphere or a nitrogen atmosphere.

The foaming of pearl rock or obsidian is due to the volatilization of water contained in the pearl rock or obsidian. By setting the heat treatment temperature to 150°C or more, sufficient water volatilization occurs to promote foaming. By setting the heat treatment temperature to 600° or less, the phenomenon of LDH crystal changing from a layered structure to a spinel structure is suppressed, and the deactivation of the ion exchange capacity caused by the above crystal structure change is avoided, and the function of adsorbing the acid gas can be well maintained.

Examples

Next, specific examples of the present invention will be described, but the present invention is not limited to these examples.

<Example 1: LDH + Sodium Metasilicate + Pearl Rock>

200 g of powdered carbonate-type LDH (KYOWAAD1000 produced by Kyowa Chemical Industry Co., Ltd.) and 30 g of pearl rock (from Mikata, Hyogo Prefecture) were put into in a mixing and stirring granulator (product name "VG-01" produced by Powrex Corporation) and while stirring at 400 rpm of rotation number, 220 g of 12% by mass sodium metasilicate aqueous solution was slowly added, and granules were grown in a snowball manner by rolling granulation. The resulting coarse granules were further processed in a wet extrusion granulator (product name "Multi Gran MG-55" produced by DALTON CORPORATION) with a 2.5 mm diameter die to produce granulated pellets. The resulting granulated pellets were spheronized by a spheronizing/sizing machine (product name "Malmerizer QJ-230T" produced by DALTON CORPORATION), and the spheronized compacts after sizing were dried at 200°C for 4 hours to obtain Granulated LDH1 having a granule size of 2.0 to 3.0 mm.

<Example 2: LDH + Sodium Metasilicate>

200 g of powdered carbonate-type LDH (KYOWAAD1000 produced by Kyowa Chemical Industry Co., Ltd.) was put into the mixing and stirring granulator (product name "VG-01" produced by Powrex Corporation) and while stirring at 400 rpm of rotation number, 200 g of 12% by mass sodium metasilicate aqueous solution was slowly added, and then 20 g of pure water was added, and granules were grown in the snowball manner by the rolling granulation. The resulting coarse granules were further processed in the wet extrusion granulator (product name "Multi Gran MG-55" produced by DALTON CORPORATION) with the 2.5 mm diameter die to produce granulated pellets. The resulting granulated pellets were spheronized by the spheronizing/sizing machine (product name "Malmerizer QJ-230T" produced by DALTON CORPORATION), and the spheronized compacts after sizing were dried at 200°C for 4 hours to obtain Granulated LDH2 having a granule size of 2.0 to 3.0 mm.

<Comparative Example 1: LDH>

200 g of powdered carbonate-type LDH (KYOWAAD1000 produced by Kyowa Chemical Industry Co., Ltd.) was put into the mixing and stirring granulator (product name "VG-01" produced by Powrex Corporation) and while stirring at 400 rpm of rotation number, 175 g of pure water was added, and granules were grown in the snowball manner by the rolling granulation. The resulting coarse granules were further processed in the wet extrusion granulator (product name "Multi Gran MG-55" produced by DALTON CORPORATION) using the 2.5 mm diameter die to produce granulated pellets. Then, the granulated pellets were spheronized by the spheronizing/sizing machine (product name "Malmerizer QJ-230T" produced by DALTON CORPORATION), and the spheronized compacts after sizing were dried at 200°C for 4 hours to obtain Granulated LDH3 having a granule size of 2.0 to 3.0 mm.

<Assessment 1 _Water Resistance>

Granulated LDH1 to 3 were each immersed in pure water and visually inspected for the presence or absence of collapse. Granulated LDH1 (Example 1), which blends sodium metasilicate and pearl rock, and Granulated LDH2 (Example 2), which blends only sodium metasilicate, did not collapse even after 9 days of immersion in pure water. On the other hand, Granulated LDH3 (Comparative Example 1), which blends neither sodium metasilicate nor pearl rock, collapsed immediately with a sound when immersed in water (see Fig. 1).
The above assessment results confirm that the addition of sodium metasilicate enhances the water resistance.

<Assessment 2_Apparent Porosity>

The apparent porosity was measured by the following procedure, with reference to "JIS R 1634:1998 Test method for density and apparent porosity of fine ceramics". An average of three measurements was used for comparison.
Procedure 1: Weigh an empty pycnometer (A).
Procedure 2: Put a sample dried at 110°C in the empty pycnometer, and weigh it (B).
Procedure 3: Weigh the pycnometer containing the 110°C dried sample filled with pure water (C).
Procedure 4: Transfer the sample to a beaker, boil it for 3 hours or more, and allow it to cool.
Procedure 5: After boiling, put the sample in the pycnometer, fill it with pure water, and weigh it (D).
Procedure 6: Calculate the apparent porosity using the following formula.

$$\text{Apparent porosity (\%)} = (D-C)/(B-A) \times 100$$

Table 1 shows the results of measuring the apparent porosity of Granulated LDH1 (Example 1) and Granulated LDH2 (Example 2). Note that Granulated LDH3 (Comparative Example 1) could not be measured because it collapsed when immersed in pure water and could not be boiled, as indicated in the <Water Resistance> section.

[Table 1]

| Table 1 | | | | Unit: % |
|---|---|---|---|---|
| | 1st Time | 2nd Time | 3rd Time | Average |
| **Granulated LDH1 (Example 1)** | **9.9** | **10.6** | **13.7** | **11.4** |
| **Granulated LDH2 (Example 2)** | **1.3** | **1.0** | **1.0** | **1.1** |

From the above assessment results, it can be confirmed that the use of silicate binder and foaming agent (pearl rock) in combination (Example 1) increases the apparent porosity of granulated LDH.

<Assessment 3_Crushing Strength>

The crushing strength of Granulated LDH1 (Example 1), Granulated LDH2 (Example 2), and Granulated LDH3 (Comparative Example 1) was measured by using a Kiya hardness tester.

The crushing strength of 10 granules was measured and the results were calculated as an average and are shown in Table 2.

[Table 2]

| Table 2 | | | | | | | | | | | Unit: N |
|---|---|---|---|---|---|---|---|---|---|---|---|
| | No. 1 | No. 2 | No.3 | No. 4 | No. 5 | No. 6 | No. 7 | No. 8 | No.9 | No. 10 | Average |
| Granulated LDH1 (Example 1) | 5.5 | 12.0 | 5.0 | 5.0 | 6.0 | 6.0 | 5.5 | 12.5 | 5.0 | 9.0 | 7.2 |
| Granulated LDH2 (Example 2) | 5.0 | 7.5 | 7.0 | 5.5 | 5.5 | 7.5 | 5.0 | 7.0 | 10.5 | 8.0 | 6.9 |
| Granulated LDH3 (Comparative Example 1) | 8.0 | 8.0 | 6.5 | 6.5 | 5.0 | 11.0 | 8.5 | 11.5 | 13.5 | 8.0 | 8.7 |

The measurement results of Granulated LDH1 (Example 1), Granulated LDH2 (Example 2), and Granulated LDH3 (Comparative Example 1) all showed the crushing strength of 4 N or more.

As confirmed in Assessment 2 described above, it can be confirmed that Granulated LDH1 (Example 1) has no reduction in the crushing strength despite having a high apparent porosity. The compatibility of a high apparent porosity and a crushing strength of 4 N or more is considered to be an effect of the sodium metasilicate.

<Assessment 4 _Dynamic Adsorption Amount>

60 g each of Granulated LDH1 (Example 1) and Granulated LDH3 (Comparative Example 1) were filled into each column with an inside diameter of 57 mm and a length of 250 mm, and a simulated acid gas with a hydrogen chloride concentration of 400 ppm and a temperature of 150°C was passed through at a superficial rate of 0.4 m/sec. The results of calculating the dynamic adsorption amount using the following formula (1) based on the time to reach 50% break-through are shown in Table 3.

$$q_e = 3600 V T C_1 \times 10^{-6} \times 273/(273+t) \times M_i/22.4/Z_i\rho \qquad (1)$$

wherein, in the above formula (1), $q_e$: dynamic adsorption amount [g-gas/g-granulated LDH], V: superficial rate [m/s], T: time to reach 50% break-through [h], $C_i$: acid gas concentration [ppm], t: gas temperature [°C], $M_i$: molecular weight of gas component, $Z_i$: filled bed height [m], $\rho$: filled density of granulated LDH [kg/m$^3$].

[Table 3]

| Table 3 | | | |
|---|---|---|---|
| | Granulated LDH3 (Comparative Example 1) | Granulated LDH1 (Example 1) | Unit |
| *V* Superficial Rate | 0.36 | 0.38 | [m/s] |
| *T* Time to Reach 50% Break-through | 2.73 | 2.97 | [h] |
| *C$_i$* Acid Gas Concentration | 412 | 390 | [ppm] |
| *Z$_i$* Filled Bed Height | 0.045 | 0.045 | [m] |

(continued)

|  | Granulated LDH3 (Comparative Example 1) | Granulated LDH1 (Example 1) | Unit |
|---|---|---|---|
| $M_i$ Molecular Weight of Gas Component | 36.5 | 36.5 | - |
| $\rho$ Filled Density of Granulated LDH | 526 | 517 | [kg/m$^3$] |
| $t$ Gas Temperature | 150 | 150 | [°C] |
| $q_e$ Dynamic Adsorption Amount | 0.066 | 0.072 | g-HCl/g-Granulated LDH |

The dynamic adsorption amount of Granulated LDH1 (Example 1) was larger than the dynamic adsorption amount of Granulated LDH3 (Comparative Example 1).

Although the LDH content of Granulated LDH1 (Example 1) is lower by the amount of sodium metasilicate and pearl rock blended, it is considered that this may be due to the large apparent porosity which allows the use of the internal parts of Granulated LDH, as confirmed in Assessment 2.

**Claims**

1.    A method for producing an acid gas adsorbent, the method comprising: a granulating step of granulating a layered double hydroxide together with a silicate binder and water to form a granulated material having a granule size of 1 to 10 mm in the form of pellets or spheres; and a heat-treating step of heat treating the granulated material for hardening.

2.    The method for producing the acid gas adsorbent according to claim 1, wherein the granulating step further comprises adding a foaming agent to form the granulated material.

3.    The method for producing the acid gas adsorbent according to claim 2, wherein the foaming agent is pearl rock or obsidian.

4.    The method for producing the acid gas adsorbent according to claim 1, wherein the silicate binder is sodium metasilicate.

5.    The method for producing the acid gas adsorbent according to claim 1, wherein a heat treatment temperature in the heat-treating step is 150 to 600°C.

6.    The method for producing the acid gas adsorbent according to claim 1, wherein the silicate binder is a sodium metasilicate aqueous solution.

7.    The method for producing the acid gas adsorbent according to claim 6, wherein a concentration of the sodium metasilicate aqueous solution is 1 to 12% by mass.

8.    The method for producing the acid gas adsorbent according to claim 1, wherein the granulation is performed by at least one selected from the group consisting of a rolling granulation method, a mixing and stirring granulation method, an extrusion granulation method, a compression granulation method, and a fluidized bed granulation method.

9.    The method for producing the acid gas adsorbent according to claim 1, wherein formation of the granulated material in the form of pellets is performed by an extrusion granulation method.

10.    The method for producing the acid gas adsorbent according to claim 1, wherein formation of the granulated material in the form of spheres is performed by an extrusion granulation method.

# Fig. 1

EXAMPLE 1

GRANULATED LDH1

EXAMPLE 2

GRANULATED LDH2

COMPARATIVE EXAMPLE 1

GRANULATED LDH3

## INTERNATIONAL SEARCH REPORT

| International application No. |
|---|
| **PCT/JP2023/040879** |

**A. CLASSIFICATION OF SUBJECT MATTER**

***B01J 20/30*** (2006.01)i
FI:  B01J20/30

According to International Patent Classification (IPC) or to both national classification and IPC

**B. FIELDS SEARCHED**

Minimum documentation searched (classification system followed by classification symbols)

B01J20/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 1919447 A (TIANJIN RESEARCH & DESIGN INSTITUTE OF CHEMICAL INDUSTRY) 28 February 2007 (2007-02-28) claims, examples | 1, 4-10 |
| Y | | 2-3 |
| X | CN 108212169 A (BEIJING BOQI ELECTRIC POWER SCI TECH CO LTD) 29 June 2018 (2018-06-29) claims, examples | 1, 4-10 |
| Y | | 2-3 |
| X | CN 115041129 A (RUNHE KEHUA CATALYST SHANGHAI CO LTD) 13 September 2022 (2022-09-13) claims, examples | 1, 4-10 |
| Y | | 2-3 |

☑ Further documents are listed in the continuation of Box C.     ☑ See patent family annex.

| | |
|---|---|
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **11 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2023/040879** |

### C.    DOCUMENTS CONSIDERED TO BE RELEVANT

| Category* | Citation of document, with indication, where appropriate, of the relevant passages | Relevant to claim No. |
| --- | --- | --- |
| X | CN 102688742 A (TSINGHUA UNIVERSITY) 26 September 2012 (2012-09-26) claims, examples | 1, 4-10 |
| Y | | 2-3 |
| Y | JP 2002-253960 A (TANIMOTO, Daiki) 10 September 2002 (2002-09-10) claims, paragraph [0005] | 2-3 |
| Y | JP 2002-191966 A (HAKUSUI TECH CO LTD) 10 July 2002 (2002-07-10) claims, paragraph [0017] | 2-3 |
| Y | JP 2011-088126 A (ONUMA, Takami) 06 May 2011 (2011-05-06) claims, paragraph [0010] | 2-3 |
| A | JP 2014-113542 A (TOHKEMY CORP) 26 June 2014 (2014-06-26) | 1-10 |
| A | JP 2012-143741 A (KOCAT INC) 02 August 2012 (2012-08-02) | 1-10 |
| A | JP 2020-093252 A (TOKAI NATIONAL HIGHER EDUCATION & RES SYSTEM) 18 June 2020 (2020-06-18) | 1-10 |

Form PCT/ISA/210 (second sheet) (July 2022)

**INTERNATIONAL SEARCH REPORT**
**Information on patent family members**

International application No.

**PCT/JP2023/040879**

| Patent document cited in search report | | | Publication date (day/month/year) | Patent family member(s) | Publication date (day/month/year) |
|---|---|---|---|---|---|
| CN | 1919447 | A | 28 February 2007 | (Family: none) | |
| CN | 108212169 | A | 29 June 2018 | (Family: none) | |
| CN | 115041129 | A | 13 September 2022 | (Family: none) | |
| CN | 102688742 | A | 26 September 2012 | (Family: none) | |
| JP | 2002-253960 | A | 10 September 2002 | (Family: none) | |
| JP | 2002-191966 | A | 10 July 2002 | (Family: none) | |
| JP | 2011-088126 | A | 06 May 2011 | (Family: none) | |
| JP | 2014-113542 | A | 26 June 2014 | (Family: none) | |
| JP | 2012-143741 | A | 02 August 2012 | KR  10-2012-0080512      A | |
| JP | 2020-093252 | A | 18 June 2020 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6954569 B
- JP 6898627 B